# EUROPEAN PATENT APPLICATION

(11) **EP 1 111 003 A2**
(43) Date of publication of application: **27.06.2001**
(21) Application number: 00126412.6
(22) Date of filing: 05.12.2000
(51) Int. Cl.: C08K 13/00, C08L 9/02, C08L 15/00, C08J 3/24

(54) **Improved polymer composition and process for producing vulcanizates thereof**

(30) Priority: 15.12.1999 CA 2292158
(71) Applicant: Bayer Inc., Sarnia, ON N7T 7M2 (CA)
(72) Inventor: Von Hellens, Carl Walter, Bright's Grove, Ontario N0N 1C0 (CA)
(74) Representative: Schneider, Jürgen, Dr.

(57) **Abstract**

A polymer composition useful to produce a vulcanizate having improved compound scorch safety is described. The polymer composition includes three components. The first component is a polymer selected from the group comprising nitrile polymers and ethylene polymers. The second component is a salt of a strong base and a weak acid, the salt comprising a metal selected from Group I of the Periodic Table of Elements. The third component is a vulcanization system comprising an inorganic peroxide compound and a sulfur containing compound. The polymer compositions may further comprise optional ingredients such as one or more of: a polycarbodiimide and a filler. Vulcanizates produced from the polymer composition have a surprising and unexpected combination of properties.

## Description

The present invention relates to an improved polymer composition and to a process for producing vulcanizates thereof. More particularly, in one of its aspects, the present invention relates to a rubber composition having improved hot air aging characteristics. In yet another of its aspects, the present invention relates to a method for improving the scorch safety of a polymer vulcanizate.

The effects of oxidizing conditions on vulcanizates obtained from polymers have long been a problem, particularly in applications where the vulcanizates are exposed to elevated temperatures for extended periods of time. A variety of approaches have been developed in the art in an attempt to solve this problem.

It is known that, in compositions comprising polymers based on a monomer which results in a polymer backbone having repeating units including at least one carbon-hydrogen bond (i.e., repeating units have a secondary or tertiary carbon), thermo-oxidative attack initiated by a radical mechanism is very relevant in the deterioration of the useful properties of such compositions during oxidative aging. See, for example:
1. S. Bhattacharjee, A.K. Bhowmick and B.N. Avasthi: "Degradation of Hydrogenated Nitrile Rubber"; Polymer Degradation and Stability, 31, 71-87 (1991); and
2. K.C. Smith and B.S. Tripathy: "HNBR and Long Term Serviceability in Modern Automotive Lubricants"; Rubber World, 217 (5), 28-45 (1998).

During the oxidative degradation process located at such carbon-hydrogen bonds among other substances hydroperoxide, alcohol, keto, aldehyde and carboxylic acid functionalities are introduced into the main polymer chain (also referred to as the "polymer backbone"). This often results in polymer chain scission or crosslinking reactions which lead to changes and deterioration of the useful properties of the composition such as tensile strength, hardness, static and dynamic stiffness, elongation at break, compression set etc.

Thermo-oxidative reactions as described above are autocatalytic chain reactions, where reactive radicals are regenerated within the reaction cascade. It is known in the art to add substances (often called antioxidants) to polymer compositions to facilitate destruction of radicals or reactive intermediates produced during the polymer oxidation process (such as hydroperoxides) thereby improving the oxidative heat aging resistance of the compositions.

Non-limiting examples of useful antioxidants may be selected from the group comprising hindered phenols, p-phenylene diamine derivatives, quinoline derivatives and mixtures thereof. Phosphites, dithiophosphates, dithiocarbamates and mercaptoimidazole derivatives are also commonly employed as antioxidants. These substances often donate hydrogen atoms to other radicals and, during the polymer oxidation process, they:
(i) are converted into unreactive radicals themselves;
(ii) block certain reactions which lead to the production of free radicals (e.g., heavy metal trapping); and/or
(iii) favour reactions of reactive intermediates leading to the production of non-radical reaction products (e.g., hydroperoxide decomposer).

In many cases, to achieve their desired properties, rubber compositions are cured with a crosslinking system conventionally selected from the group comprising sulfur, sulfur donor compounds and/or a peroxide system. It is known in the art that interference of antioxidants with cure systems often presents a major problem.

Reaction of antioxidants with cure systems may lead to significant deterioration of the desired state of cure of the composition. Complete or partial depletion of the antioxidant in the composition during cure is likely to occur when the cure system generates radicals during vulcanization.

Canadian patent application 2,231,300, filed March 6, 1998, teaches a nitrile polymer vulcanizate having improved hot air aging characteristics. The nitrile polymer vulcanizate may be produced by admixing under vulcanizing conditions a composition comprising: (i) a nitrile polymer; (ii) a filler; (iii) an additive selected from the group comprising:a strong base, a salt of a strong base and a weak acid, a salt of a weak acid, a carbodiimide, a polycarbodiimide and mixtures thereof; and (iv) a vulcanization system.

Canadian patent application 2,281,274, filed August 31, 1999, also teaches a vulcanizate having improved hot air aging properties. The polymer composition includes two components. The first component is a polymer having a main polymer chain derived from: (i) at least about 30% by weight of a first monomer which introduces at least one of a secondary carbon and a tertiary carbon to the backbone, and (ii) from 0 to about 70% by weight of at least one other monomer. The second component is a salt of a strong base and a weak acid, the salt comprising a metal selected from Group I of the Periodic Table of Elements. The polymer compositions may further comprise optional ingredients such as one or more of: a vulcanization system, a polycarbodiimide and a filler.

These two Canadian patent applications represent a significant advance in the art of improving the hot air aging properties of various polymer vulcanizates. Notwithstanding this, there is still room for improvement. Specifically, neither of the Canadian patent applications teach or suggest any criticality suggested with the use of a particular vulcanization system. Indeed, in Canadian patent application 2,281,274, the vulcanization system is stated as being optional. Additionally, in some cases, the advantages accruing from use of the subject matter in these two Canadian patent applications is achieved at the expense of an erosion of other properties (e.g., compound Mooney, compression set, heat build-up and permanent set).

Accordingly, there remains an ongoing need in the art for further improvements in the properties of polymer vulcanizates, particularly while substantially maintaining the advantages of those described in Canadian patent applications 2,231,300 and 2,281,274. It would be especially advantageous if the subject matter described in the these Canadian patent application could be employed while mitigating and/or obviating a concurrent erosion of other properties of the polymer vulcanizate.

It is an object of the present invention to obviate or mitigate at least one of the above-mentioned disadvantages of the prior art.

It is another object of the present invention to provide a novel polymer composition.

It is yet another object of the present invention to provide a novel process for producing a polymer vulcanizate.

It is yet another object of the present invention to provide a novel method for improving the hot air aging characteristics of a polymer vulcanizate.

Accordingly, in one of its aspects, the present invention provides a polymer composition comprising:
(i) a polymer selected from the group comprising nitrile polymers and ethylene polymers;
(ii) a salt of a strong base and a weak acid, the salt comprising a metal selected from Group I of the Periodic Table of Elements;
(iii) a vulcanization system comprising an inorganic peroxide compound and a sulfur containing compound.

In another of its aspects, the present invention provides a method for improving the hot air aging characteristics of a polymer comprising the steps of:
admixing:
   (i) a polymer selected from the group comprising nitrile polymers and ethylene polymers;
   (ii) a salt of a strong base and a weak acid, the salt comprising a metal selected from Group I of the Periodic Table of Elements;
   (iii) a vulcanization system comprising an inorganic peroxide compound and a sulfur containing compound; and
vulcanizing the polymer composition.

Thus, it has been surprisingly and unexpected discovered that the combination of a specific polymer, a specific salt additive and a specific vulcanization system can be used to provide a vulcanizate having a desirable combination of properties such as one or more of:
- reduction of Mooney viscosity;
- increase in time to compound scorch (also known as scorch safety);
- increase in ODR delta torque and compound modulus;
- reduction in ODR reversion;
- reduction in rate of modulus increase on aging;
- decrease in rate of elongation reduction;
- decrease in compression set;
- decrease in Goodrich HBU;
- decrease in permanent set;
- increase in dynamic stiffness; and
- decrease in change of stiffness with temperature.

These improvements are seen compared to similar vulcanizates produced using an inorganic peroxide as the sole vulcanizing agent or a sulfur-containing compound as the sole vulcanizing agent. As will be illustrated hereinbelow a number of the improvements are synergistic.

Embodiments of the present invention will be described with reference to the accompanying drawings, in which:

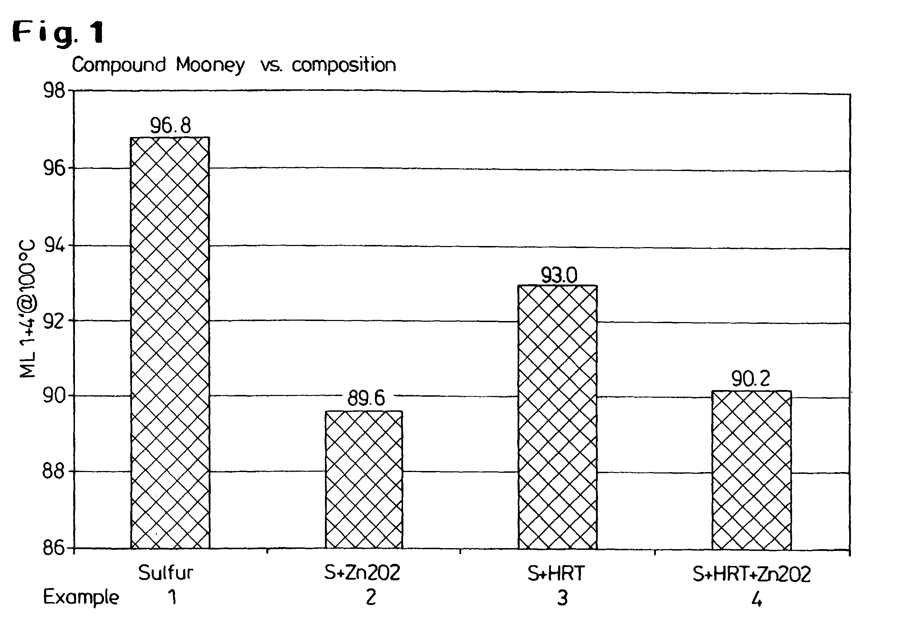

Figures 1-8 illustrate graphically a comparison between various vulcanizates produced in the Examples set out hereinbelow.

The first component of the present polymer composition is a polymer selected from the group comprising nitrile polymers and ethylene polymers

As used throughout this specification, the term "nitrile polymer" is intended to have a broad meaning and is meant to encompass a copolymer of a conjugated diene and an unsaturated nitrile.

The conjugated diene may be a C₄-C₆ conjugated diene. Non-limiting examples of suitable such conjugated dienes may be selected from the group comprising butadiene, isoprene, piperylene, 2,3-dimethyl butadiene and mixtures thereof. The preferred C₄-C₆ conjugated diene may be selected from the group comprising butadiene, isoprene and mixtures thereof. The most preferred C₄-C₆ conjugated diene is butadiene.

The unsaturated nitrile may be a C₃-C₅ α,β-unsaturated nitrile. Non-limiting examples of suitable such C₃-C₅ α,β,unsaturated nitriles may be selected from the group comprising acrylonitrile, methacrylonitrile, ethacyrlonitrile and mixtures thereof. The most preferred C₃-C₅ α,β-unsaturated nitrile is acrylonitrile.

Preferably, the copolymer comprises from about 40 to about 85 weight percent of the copolymer of bound conjugated diene and from about 15 to about 60 weight percent of the copolymer of bound unsaturated nitrile. More preferably, the copolymer comprises from about 60 to about 75 weight percent of the copolymer of bound conjugated diene and from about 25 to about 40 weight percent of the copolymer of bound unsaturated nitrile. Most preferably, the copolymer comprises from about 60 to about 70 weight percent of the copolymer of bound conjugated diene and from about 30 to about 40 weight percent of the copolymer of bound unsaturated nitrile.

Optionally, the copolymer may further comprise a bound unsaturated carboxylic acid. Non-limiting examples of suitable such bound unsaturated carboxylic acids may be selected from the group comprising fumaric acid, maleic acid, acrylic acid, methacrylic acid and mixtures thereof. The bound unsaturated carboxylic acid may be present in an amount of from about 1 to about 10 weight percent of the copolymer, with this amount displacing a corresponding amount of the conjugated diolefin.

Further, a third monomer may be used in production of the nitrile polymer. Preferably, the third monomer is an unsaturated mono- or di-carboxylic acid or derivative thereof (e.g., esters, amides and the like).

While the invention may be used with fully or partially unsaturated nitrile polymers, a particularly preferred group of nitrile polymers useful in the production of the present vulcanizate are hydrogenated or partially hydrogenated nitrile polymers (also known in the art as HNBR). Preferably, the copolymer is hydrogenated and comprises a residual carbon-carbon double bond unsaturation of less than about 30, more preferably from about 30 to about 0.05 mole percent, even more preferably from about 15 to about 0.05 mole percent, even more preferably from about 10.0 to about 0.05 mole percent, even more preferably from about 7.0 to about 0.05 mole percent, most preferably from about 5.5 to about 0.05 mole percent.

As used throughout this specification, the term "ethylene polymer" is intended to have a broad meaning and is meant to encompass a copolymer, preferably an elastomer, of ethylene and at least one other monomer. More preferably, the ethylene polymer is an elastomer selected from the group comprising:
ethylene-propylene copolymers;
ethylene-propylene-non conjugated diene terpolymers; and
ethylene vinyl acetate copolymers.

Such copolymers are conventional in the art.

The second component is a salt of a strong base and a weak acid, the salt comprising a metal selected from Group I of the Periodic Table of Elements.

Non-limiting examples of the weak acids useful in the production of the abovementioned salt may be selected from the group comprising carbonic acid, C₁-C₅₀ fatty acids, ethylene diamine tetra(acetic acid), phosphoric acid and mixtures thereof.

The preferred salt for use in the present polymer composition may be selected from the group comprising sodium carbonate, potassium carbonate, sodium stearate, potassium stearate and mixtures thereof. The most preferred salt for use in the present polymer composition is sodium carbonate.

Preferably, the salt is present in the polymer composition in an amount in the range of from about 0.5 to about 50 parts by weight, preferably in the range of from about 1 to about 20 parts by weight, most preferably in the range of from about 2.5 to about 7.5 parts by weight.

The third component of the present polymer composition is a vulcanization system. The vulcanization system comprises a sulfur-containing compound and an inorganic compound.

Preferably, the sulfur-containing compound is selected from the group comprising sulfur, a sulfur donor cure system and mixtures thereof.

Non-limiting examples of useful sulfur donor cure systems may be selected from the group comprising thiuram compounds (such as tetramethyl thiuram disulfide, tetraethyl thiuram disulfide, tetramethyl thiuram monosulfide and the like), and morpholine compounds (such as morpholine disulfide and the like). Further, it is possible to use dithiobis(caprolactam) in a sulfur donor cure system. The useful amount of sulfur or the sulfur-donating compound preferably is in the range of from about 0.1 to about 5 parts by weight.

As is known in the art, when the vulcanization agent is sulfur or a sulfur donor cure system, it is conventional to include a vulcanization accelerator. Non-limiting examples of useful vulcanization accelerators may be selected from the group comprising thiazole compounds (such as 2-mercaptobenzothiazole [MBT], dithiobis mercaptobenzothiazole [MBTS] and the like), sulfenamide compounds (such as N-cyclohexyl-2-benzothiazyl sulfenamide and the like), dithiocarbamates (such as zinc-dibutyl dithiocarbamate) and mixtures thereof. Such vulcanization accelerators are preferably used in an amount in the range of 0.5 to 5 parts by weight. Further, it is known to use metal oxides such as zinc oxide, magnesium oxide and the like, as well as acids such as stearic acid, as cure activators in these vulcanization systems.

The other component of the vulcanization system used in the present polymer composition is an inorganic peroxide, preferably zinc peroxide. A suitable composition containing zinc peroxide which can be used in the present polymer composition is commercially available from Struktol Company of America under the tradename Struktol™ ZP 1014. Preferably, such composition is used in an amount in the range of from about 2 to about 10 parts by weight, more preferably from about 4 to about 6 parts by weight, most preferably about 5 parts by weight, per hundred parts by weight polymer in the composition. Alternatively, it is possible to utilize zinc peroxide in a pure state, in which case it is preferably used an amount in the range of from about 0.5 to about 2.5 parts by weight, more preferably from about 1.0 to about 1.5 parts by weight, most preferably about 1.25 parts by weight, per hundred parts by weight polymer in the composition.

Optionally, the present polymer composition further comprises a carbodiimide, a polycarbodiimide or mixtures thereof. The preferred carbodiimide is available commercially under the tradenames Rhenogram™ P50 and Stabaxol™ P. This ingredient may be used in the present polymer composition in an amount in the range of from 0 to about 15 parts by weight, more preferably in the range of from 0 to about 10 parts by weight, even more preferably in the range of from about 0 to about 2 parts by weight.

Preferably, the present polymer composition further comprises a filler. The nature of the filler is not particularly restricted and the choice of suitable fillers is within the purview of a person skilled in the art. Non-limiting examples of suitable fillers include carbon black (e.g., N330, N550, N990, N660 and N770), clays, titanium dioxide, silica fillers (with or without unsaturated silanes), calcium carbonate, talc (magnesium silicate) and the like. The amount of filler is conventional. Preferably, the filler is present in an amount in the range of from about 20 to about 200 parts by weight per hundred parts by weight of the polymer. More preferably, the filler is present in an amount in the range of from about 20 to about 100 parts by weight per hundred parts by weight of the polymer. Most preferably, the filler is present in an amount in the range of from about 40 to about 80 parts by weight per hundred parts by weight of the polymer.

In the present process, the polymer, the salt additive, the vulcanization system and the optional ingredients (if present) may be admixed in any conventional manner known in the art. For example, this polymer composition may be admixed on a two-roll rubber mill or an internal mixer.

Thus, the polymer composition is mixed in a conventional manner and the temperature thereof during mixing is maintained as is known in the art.

In the present process, it is preferred to heat the polymer composition to form vulcanizates using conventional procedures well known in the art. Preferably, the polymer composition is heated to a temperature in the range of from about 130° to about 200°C, preferably from about 140° to about 190°C, more preferably from about 150° to about 180°C.

Preferably, the heating is conducted for a period of from about 1 minute to about 15 hours, more preferably from about 5 minutes to about 30 minutes. Various methods of post cure, as is well known in the art, may be used to complete the vulcanization step.

In many cases, the present polymer composition will further comprise an antioxidant. Non-limiting examples of useful antioxidant compounds may be selected from the group comprising alkylated diphenylamines (such as styrenated diphenyl amine and the like), quinoline- type stabilizers (such as 2,2,4-trimethyl-1,2-dihydroquinoline polymer and the like), mercaptobenzimidazoles (such as zinc salts of methyl-mercaptobenzimidale) and the like. With sulfur-containing vulcanization systems, phenylene diamine derivatives (such as N-phenyl-N'-isopropyl-p-phenylene diamine and the like), as well as sterically hindered phenols (such as butylated hydroxy toluene and the like) can also be used. The amount of antioxidant used is within the purview of a person skilled in the art.

Other conventional compounding ingredients may also be included by mixing with the copolymer in the conventional manner. Such other compounding ingredients are used for their conventional purposes and include activators such as zinc oxide and magnesium oxide; stearic acid; plasticizers; processing aids; reinforcing agents; promoters and retarders in amounts well known in the art.

During production of the vulcanizate from the polymer composition, the vulcanizate may be formed into a composite with, for example, polyester fiber, nylon fiber, aramide fiber, glass fiber, carbon fiber, steel fiber cords or fabrics and the like, whereby a desired rubber composite product is obtained.

Embodiments of the present invention will be illustrated with reference to the following Examples which are provided for illustrative purposes and should not be used to limit the scope of the invention. Unless otherwise stated, all parts in the Examples are parts by weight.

Further, in the Examples, the materials used include the following:
- Therban™ C3446:: a hydrogenated nitrile butadiene polymer, commercially available from Bayer Inc.;
- Therban™ HT VP KA8805:: a hydrogenated nitrile butadiene polymer containing a salt additive as described above, commercially available from Bayer Inc.;
- Maglite™ D:: magnesium oxide, activator, commercially available from CP Hall;
- Stearic acid, Emersol™ 132NF:: activator;
- Zinc oxide:: activator;
- Carbon black, N550:: filler;
- Vulkanox™ ZMB-2/C5 :: antidegradant, commercially available from Bayer Inc.;
- Naugard™ 445:: antioxidant, commercially available from Uniroyal Chemicals;
- Struktol™ ZP 1014:: zinc peroxide, commercially available from Struktol Company of America;
- Sulfur:: vulcanizing agent;
- Vulkacit™ CZ/EG-C:: N-cyclohexyl-2-benzothiazyl sulfenamide, vulcanizing agent, commercially available from Bayer Inc.; and
- Vulkacit™ Thiuram/C:: tetramethyl thiuram disulfide, vulcanizing agent, commercially available from Bayer Inc.

### EXAMPLES 1-4

The following procedure was used for each of Examples 1-4. The polymer composition used in Examples 1-4 are shown in Table 1.

As will be apparent to those of skill in the art, the polymer composition of Example 1 utilized a sulfur-containing compound as the sole vulcanizing agent and no salt additive, Example 2 utilized a sulfur-containing compound and zinc peroxide as the vulcanization agent and no salt additive, and Example 3 utilized a sulfur-containing compound as the sole vulcanizing agent with the salt additive present. Accordingly, Examples 1-3 are provided for comparison purposes only and are outside the scope of the present invention. Example 4, which utilized a sulfur-containing compound and zinc peroxide as the vulcanization agent in the presence of the salt additive is within the scope of the present invention.

All components of the polymer composition, except the sulfur-containing vulcanizing agent(s) were mixed in a Banbury mixer using conventional techniques. The compositions were dumped from the mixer at temperatures of 151°C, 151°C, 142°C and 140°C for each of Examples 1-4, respectively. The vulcanizing agents were added to the compositions on a warm mill in a conventional manner.

The elongation at break of the vulcanizates was determined in accordance with ASTM D412-80. Hardness properties were determined using a Type A Shore durometer in accordance with ASTM-D2240-81.

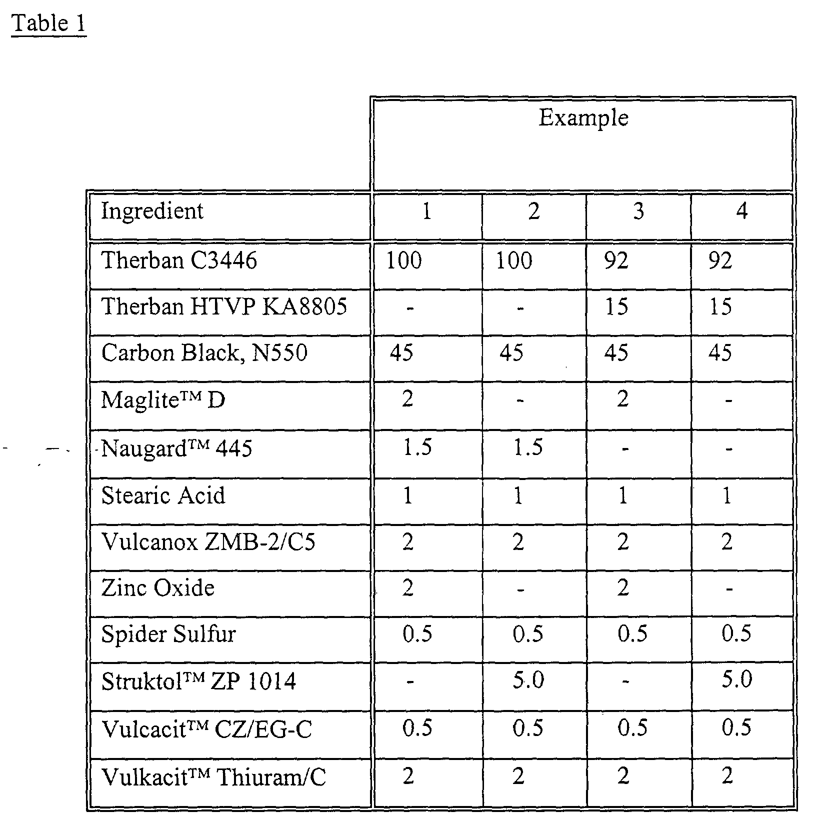

Figures 1-8 illustrate, in a comparative fashion, various properties of the vulcanizates produced in Examples 1-4. In the Figures, "HRT" denotes the presence of the salt additive described hereinabove by virtue of the presence of Therban™ HT VP KA8805.

Thus, with reference to Figure 1, the compound Mooney for each of the Examples is illustrated. As shown, in a sulfur-cure system, the use of the salt additive (Example 3) results in an increase in the compound Mooney compared to the use of a sulfur/zinc peroxide curing systems with no salt additive (Example 2). In Example 4, the compound Mooney is advantageously reduced to a level comparable to Example 2 (i.e., use of sulfur and zinc peroxide cure without salt additive). In the context of all of the results presented herein, this is advantageous since, as will be seen below, the benefits of using the salt additive are achieved while this disadvantage is obviated.

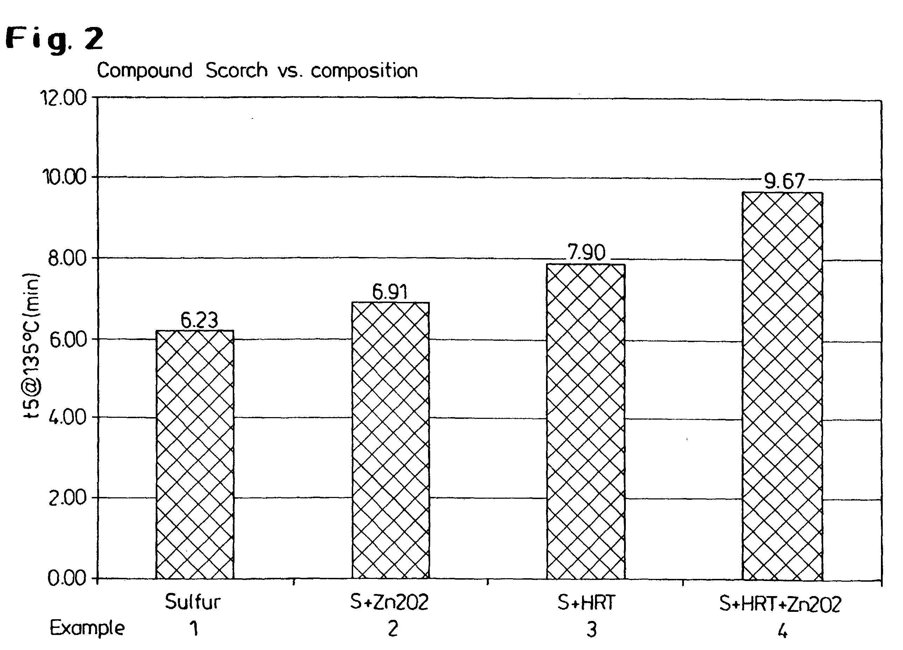

With reference to Figure 2, an important advantage of the present invention is illustrated. Specifically, the use of zinc peroxide or the salt additive on their own (Examples 2 and 3, respectively) in a sulfur-cure system results in small increases in the compound scorch safety. However, the combination of the sulfur/zinc peroxide cure system and the salt additive (Example 4) results in a synergistic increase in the compound scorch safety, even compared to the additive effects of compound scorch safety resulting in Examples 2 and 3.

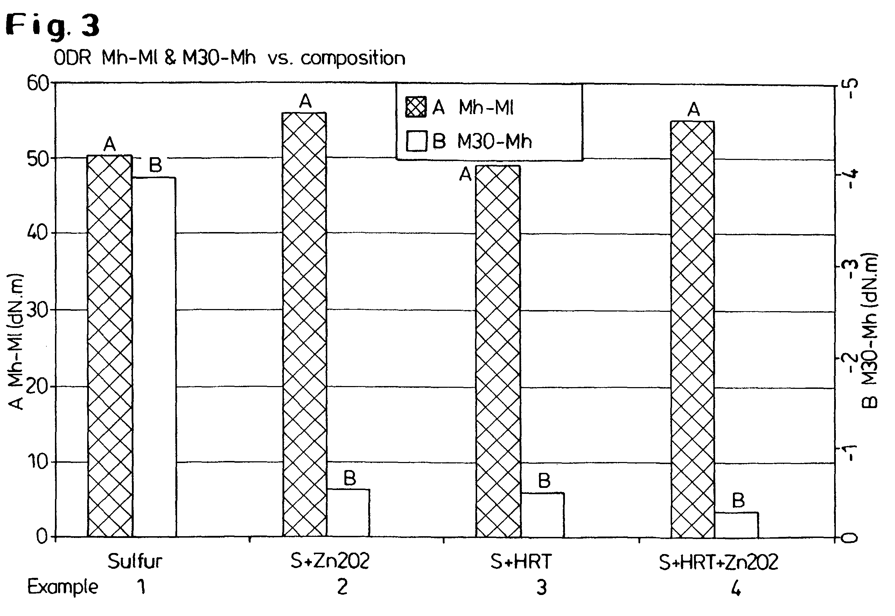

In Figure 3, there is illustrated the ODR Delta Torque for the various Examples. Resistance to reversion may be predicted from an ODR test by subtracting the maximum torque from the torque at the end of the test. Figure 3 illustrates that the vulcanizative Example 4 returns the Delta Torque profile of Example 3 to one similar to Example 2.

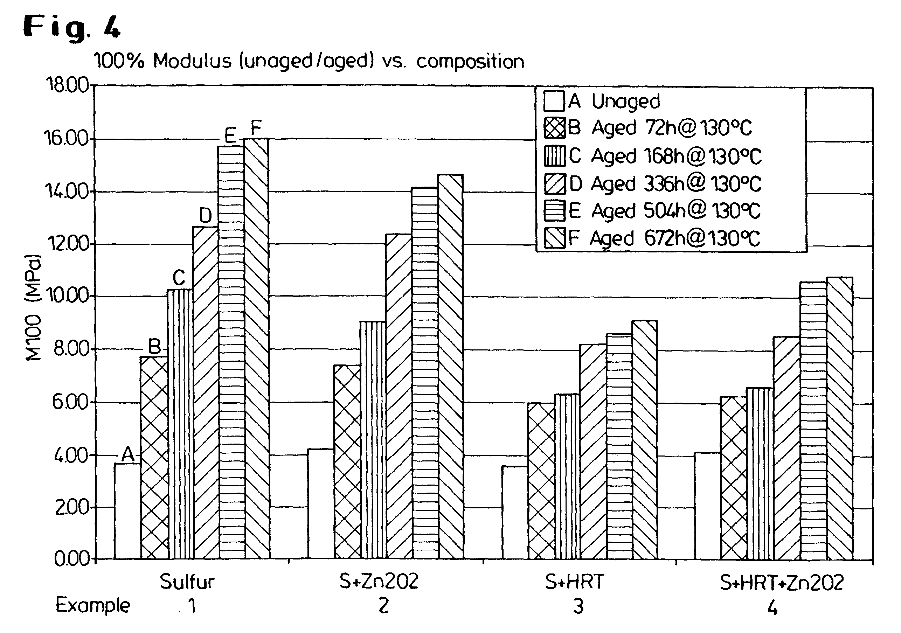

In Figure 4, the unaged and hot air aged 100% modulus is illustrated for each of the Examples. From Figure 4, it can be readily seen that the use of zinc peroxide without salt additive in a sulfur-cure system (Example 2) provides only a slight improvement in the resistance to modulus increase when compared to the vulcanizates containing the salt additive (i.e., Examples 3 and 4). In other words, the vulcanizative of

Example 4 is able to achieve favourable modulus properties comparable to those using the salt additive in a sulfur-cure system while providing additional advantages which the latter approach does not provide.

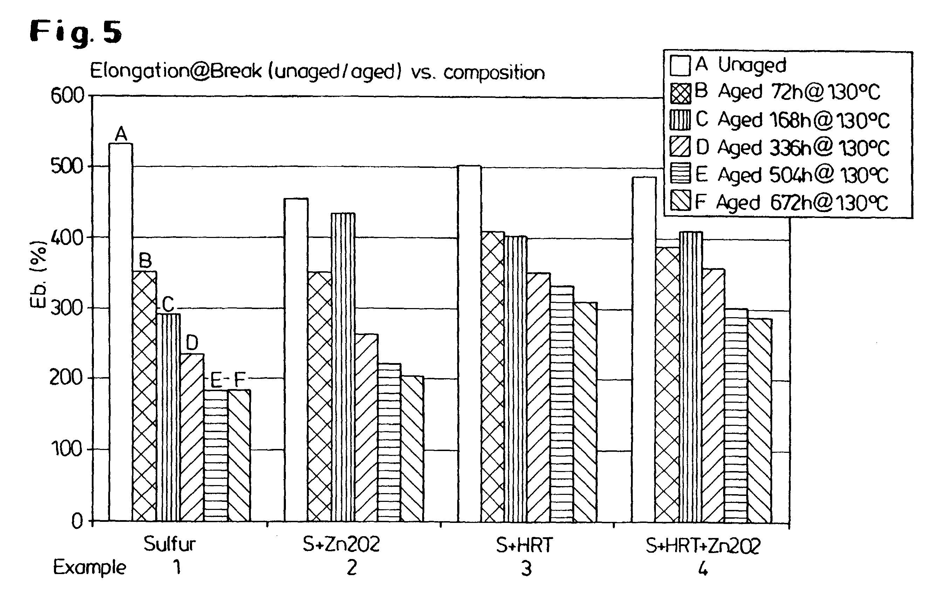

Figure 5 illustrates elongation at break for unaged and aged vulcanizates in Examples 1-4. The trends and advantages here are similar to those explained above for Figure 4.

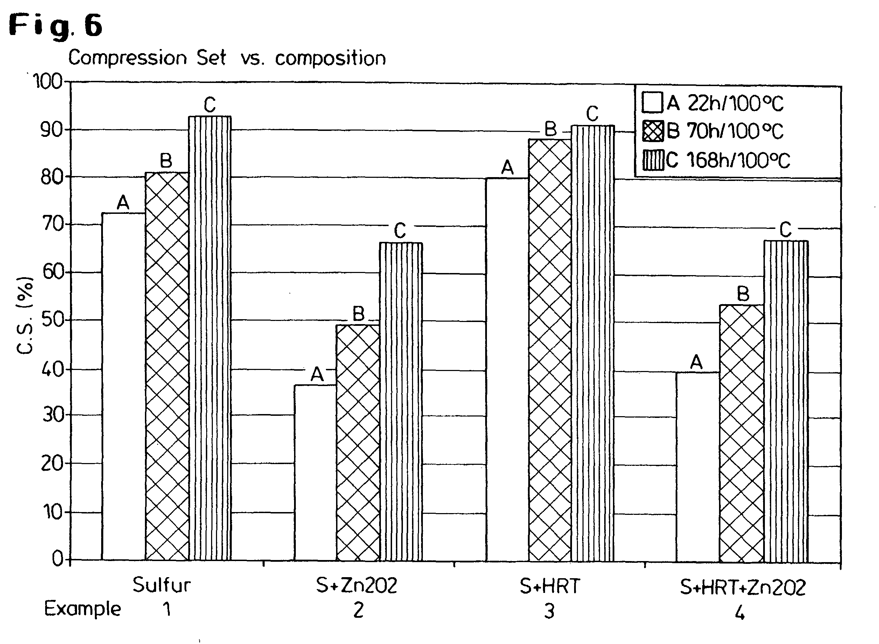

In Figure 6, the compression set for the various vulcanizates of Examples 1-4 is illustrated. As can been seen, the use of the salt additive in a sulfur-cure system (Example 3) tends to increase the compression set of the vulcanizate to levels similar to those of the sulfur-cure system on its own (Example 1). In other words, the benefits of using the sulfur-zinc peroxide cure system (Example 2) are diminished when the salt additive is used (Example 3). In Example 4, the profile of the compression set is returned to one similar to Example 2 while achieving other advantages reported above and below which are not achieved in the vulcanizate of Example 2.

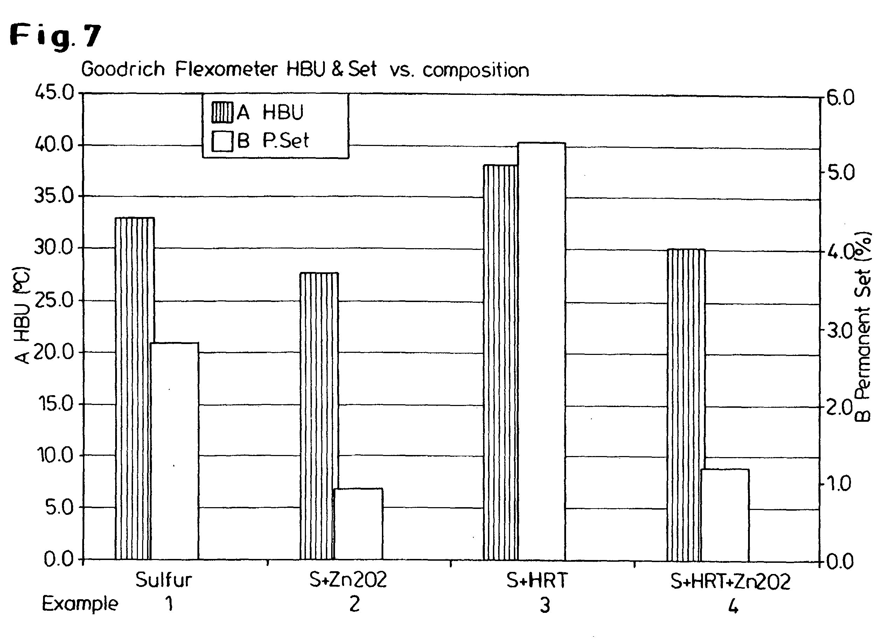

In Figure 7, there is illustrated the Goodrich Flexometer unaged heat build-up and permanent set properties for the vulcanizates in Examples 1-4. As illustrated, use of the salt additive in a sulfur-cure system (Example 3) results in a significant increase in heat build-up and permanent set compared to use of a sulfur/zinc peroxide cure system with no salt additive (Example 2). In contrast, in the vulcanizate of Example 4, the heat build-up and permanent set properties are significantly reduced compared to the vulcanizate of Example 3. As illustrated, the profile of the heat build-up and permanent set properties of Example 4 is similar to that of Example 2 while achieving other advantages which the vulcanizate of Example 2 does not achieve.

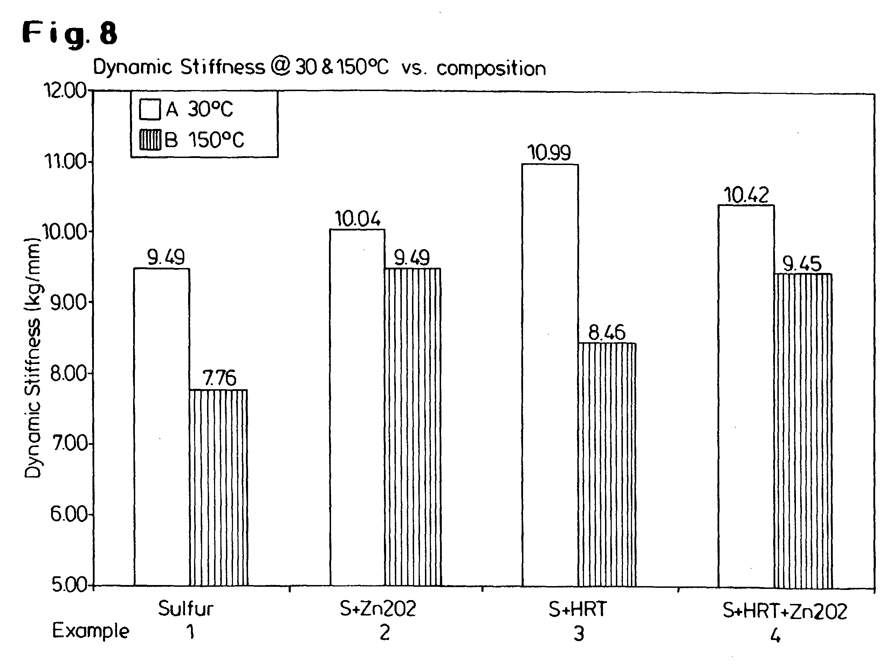

Figure 8 illustrates the dynamic stiffness of the vulcanizates produced in Examples 1-4. As is known, a basic characteristic of hydrogenated nitrile-butadiene rubber compared to other polymers is that the reduction in modulus with increasing operating temperature is relatively low. This can be an important feature in certain applications. For example, in a timing belt application, it is important to maintain the stiffness of the belt tooth as constant as possible over the belt operating temperature range. To determine the compound stiffness of each vulcanizate, a MER1100B (Mechanical Energy Resolver) test was performed and the results are provided in Figure 8. This Figure illustrates that use of zinc peroxide in a sulfur-cure system (Example 2) increases the dynamic stiffness slightly compared to a sulfur-cure system (Example 1). More importantly, it provides less reduction in stiffness as the temperature is raised to 150°C. As shown, the addition of a salt additive to a sulfur-cure system (Example 3) increases dynamic stiffness but does not reduce the change in stiffness with increasing temperature. In contract, the combination of a sulfur/zinc peroxide cure system with the salt additive (Example 4) results in both an increase in stiffness and a reduction in change of stiffness with increasing temperature relative to the sulfur-cure system control (Example 1).

In summary, the results reported above illustrate that the combination of a sulfur/zinc peroxide cure system with the use of the salt additive described above reconciles the advantages of a sulfur/zinc peroxide cure system with no special additives versus the use of the salt additive with a sulfur (only) cure system. In other words, vulcanizates produced using a combination of a sulfur/zinc peroxide cure system and the salt additive have a combination of properties which are not achieved when using a sulfur only cure system (no salt additive), a sulfur/zinc peroxide cure system (no salt additive) or a sulfur-cure system with the salt additive. These advantages are surprising and unexpected.

## Claims

1. A polymer composition comprising:
(i) a polymer selected from the group comprising nitrile polymers and ethylene polymers;
(ii) a salt of a strong base and a weak acid, the salt comprising a metal selected from Group I of the Periodic Table of Elements;
(iii) a vulcanization system comprising an inorganic peroxide compound and a sulfur containing compound.

2. The polymer composition defined in claim 1, wherein the polymer comprises a nitrile polymer

3. The polymer composition defined in claim 2, wherein the nitrile polymer is selected from the group comprising unsaturated nitrile/conjugated diene copolymer, hydrogenated unsaturated nitrile/conjugated diene copolymer, unsaturated nitrile/conjugated diene/ethylenically unsaturated monomer terpolymer, hydrogenated unsaturated nitrile/conjugated diene/ethylenically unsaturated monomer terpolymer and mixtures thereof.

4. The polymer composition defined in claim 3, further comprising a polycarbodiimide.

5. The polymer composition defined in claim 4, wherein the salt is selected from the group comprising potassium carbonate, sodium carbonate, sodium or potassium salts of C₁ to C₅₀-mono, di or poly carboxylic acids, sodium phosphate, potassium phosphate and mixtures thereof.

6. The polymer composition defined in claim 5, wherein the salt is selected from the group comprising sodium carbonate, sodium stearate and mixtures thereof.

7. The polymer composition defined in claim 6, further comprising a filler.

8. The polymer composition defined in claim 7, wherein the filler is selected from the group comprising carbon black, clay, titanium dioxide, silica fillers, talc and mixtures thereof.

9. The polymer composition defined in claim 5, wherein the salt is present in an amount in the range of from about 0.5 to about 50 parts by weight.

10. The polymer composition defined in claim 9, wherein the salt is present in an amount in the range of from about 1 to about 20 parts by weight.

11. The polymer composition defined in claim 1, wherein the vulcanization system comprises sulfur, a sulfur-containing compound and zinc peroxide.

12. The polymer composition defined in claim 1, wherein the polymer comprises an ethylene polymer.

13. The polymer composition defined in claim 12, further comprising a polycarbodiimide.

14. The polymer composition defined in claim 13, wherein the salt is selected from the group comprising potassium carbonate, sodium carbonate, sodium or potassium salt of C₁ to C₅₀-mono, di or poly carboxylic acids, sodium phosphate, potassium phosphate and mixtures thereof.

15. The polymer composition defined in claim 14, further comprising a filler.

16. A process for producing a polymer vulcanizate comprising the steps of:
admixing:
(i) a polymer selected from the group comprising nitrile polymers and ethylene polymers;
(ii) a salt of a strong base and a weak acid, the salt comprising a metal selected from Group I of the Periodic Table of Elements;
(iii) a vulcanization system comprising an inorganic peroxide compound and a sulfur containing compound; and
vulcanizing the polymer composition.

17. The process defined in claim 16, wherein the vulcanization system comprises sulfur, a sulfur-containing compond and zinc peroxide.

18. A method for improving the compound scorch safety of a polymer vulcanizate comprising the steps of:
admixing:
(i) a polymer selected from the group comprising nitrile polymers and ethylene polymers;
(ii) a salt of a strong base and a weak acid, the salt comprising a metal selected from Group I of the Periodic Table of Elements;
(iii) a vulcanization system comprising an inorganic peroxide compound and a sulfur containing compound; and
vulcanizing the polymer composition.

19. The method defined in claim 18, wherein the polymer comprises a nitrile polymer.

20. The method defined in claim 19, wherein the nitrile polymer is selected from the group comprising unsaturated nitrile/conjugated diene copolymer, hydrogenated unsaturated nitrile/conjugated diene copolymer, unsaturated nitrile/conjugated diene/ethylenically unsaturated monomer terpolymer, hydrogenated unsaturated nitrile/conjugated diene/ethylenically unsaturated monomer terpolymer and mixtures thereof.

21. The method defined in claim 18, wherein the polymer composition further comprises a polycarbodiimide.

22. The method defined in claim 18, wherein the polymer composition further comprises a filler.

23. The method defined in claim 22, wherein the filler is selected from the group comprising carbon black, clay, titanium dioxide, silica fillers, talc and mixtures thereof.

24. The method defined in claim 18, wherein the salt is selected from the group comprising potassium carbonate, sodium carbonate, sodium or potassium salts of C₁ to C₅₀-mono, di or poly carboxylic acids, sodium phosphate, potassium phosphate and mixtures thereof.

25. The method defined in claim 18, wherein the salt is present in an amount in the range of from about 0.5 to about 50 parts by weight.

26. The method defined in claim 18, wherein the polymer comprises an ethylene polymer.

27. The method defined in claim 26, wherein the polymer composition further comprises a polycarbodiimide.

28. The method defined in claim 26, wherein the polymer composition further comprises a filler.

29. The method defined in claim 26, wherein the salt is selected from the group comprising potassium carbonate, sodium carbonate, sodium or potassium salts of C₁ to C₅₀-mono, di or poly carboxylic acids, sodium phosphate, potassium phosphate and mixtures thereof.

30. The method defined in claim 18, wherein the vulcanization system comprises sulfur, a sulfur-containing compound and zinc peroxide.
